# EUROPÄISCHE PATENTSCHRIFT

(11) **EP 3 351 892 B1**
(45) Veröffentlichungstag und Bekanntmachung des Hinweises auf die Patenterteilung: **04.09.2019**
(21) Anmeldenummer: 17001672.9
(22) Anmeldetag: 11.10.2017
(51) Int. Cl.: G01B 5/00

(54) **SCHWEISSNAHTLEHRE ZUR MESSUNG DER ABMESSUNGEN EINER SCHWEISSNAHT**
WELD SEAM GAUGE FOR MEASURING THE DIMENSIONS OF A WELD SEAM
JAUGE DE CORDON DE SOUDURE DESTINÉE À MESURER LES DIMENSIONS D'UN CORDON DE SOUDURE

(30) Priorität: 20.01.2017 DE 102017000491
(43) Veröffentlichungstag der Anmeldung: 25.07.2018
(73) Patentinhaber: Trappe, Peter, 75378 Bad Liebenzell (DE)
(72) Erfinder: Trappe, Peter, 75378 Bad Liebenzell (DE)
(74) Vertreter: Lichti - Patentanwälte Partnerschaft mbB

(56) Entgegenhaltungen:
- BE-A- 388 883
- CH-A- 203 464
- DE-B- 1 033 914
- DE-C- 626 528
- US-A- 3 597 848

## Beschreibung

Die Erfindung betrifft eine Schweißnahtlehre zum Messen der Abmessungen einer Schweißnaht, mit zwei gelenkig miteinander verbundenen und um eine Drehachse relativ zueinander schwenkbaren Armen, die mittels einer 1. Haltevorrichtung relativ zueinander festlegbar sind, und einer 1. Skala, an der ein Abstand zwischen zwei Messpunkten der Arme ablesbar ist.

Schweißnahtlehren werden verwendet, um die Abmessungen von Schweißnähten zu erfassen und um diese bewerten zu können. Insbesondere muss bei Schweißnähten sichergestellt sein, dass die tatsächlich ausgeführten Schweißnähte zumindest diejenigen Abmessungen aufweisen, die in der theoretischen Berechnung ermittelt und für die Konstruktion vorgegeben wurden.

Schweißarbeiten werden üblicherweise in Werkstätten oder auf Baustellen vorgenommen. In diesem Umfeld ist es schwierig, Vorgaben in Millimeter-Bereich exakt einzuhalten. Es ist deshalb üblich und notwendig, die Schweißnähte nach ihrer Ausbildung hinsichtlich ihrer Abmessungen zu überprüfen.

Eine herkömmliche Schweißnahtlehre wird ein- oder beidseitig einige Zentimeter neben der Schweißnaht auf die mittels der Schweißnaht verbundenen Bauteile aufgesetzt. Dabei ergeben sich Messungenauigkeiten aufgrund von Winkelschrumpfungen der Bauteile, die sich in der Praxis nicht vermeiden lassen.

Da die Schweißnahtlehre in einem Abstand von einigen Zentimetern neben der Schweißnaht angesetzt werden muss, ist ein entsprechender Platz notwendig, um die Messung durchführen zu können. Wenn dieser Platz nicht vorhanden ist, kann eine Schweißnahtmessung mit herkömmlichen Schweißnahtlehren nicht erfolgen.

Als weiteres Problem hat sich herausgestellt, dass die mittels der Schweißnaht miteinander verbundenen Bauteile auf ihrer Oberfläche durch Schweißspritzer oder sonstige Anhaftungen häufig verunreinigt sind. Diese Verunreinigungen müssen zunächst entfernt und insbesondere abgeschliffen werden, bevor eine herkömmliche Schweißnahtlehre angesetzt und eine Messung mit akzeptabler Genauigkeit durchgeführt werden kann. Dies ist aufwändig und erfordert einen hohen Zeitaufwand.

Lehren zur Vermessung von zwischen zwei rechtwinkligen Seitenflächen angeordneten Schweißnähten sind z.B. aus BE388883, US3597848, CH203464, DE626528 und DE1033914 bekannt. Diese Schweißnahtlehren weisen dabei zwei Elemente zur mechanischen Anlage an die Seitenflächen und dazwischen ein linear in Richtung der Schweißnaht verstellbares Schubelement auf.

Der Erfindung liegt die Aufgabe zugrunde, eine Schweißnahtlehre zu schaffen, mit der sich die Abmessungen einer Schweißnaht in einfacher und exakter Weise schnell bestimmen lassen.

Diese Aufgabe wird erfindungsgemäß mit einer Schweißnahtlehre mit den Merkmalen des Anspruchs 1 löst.

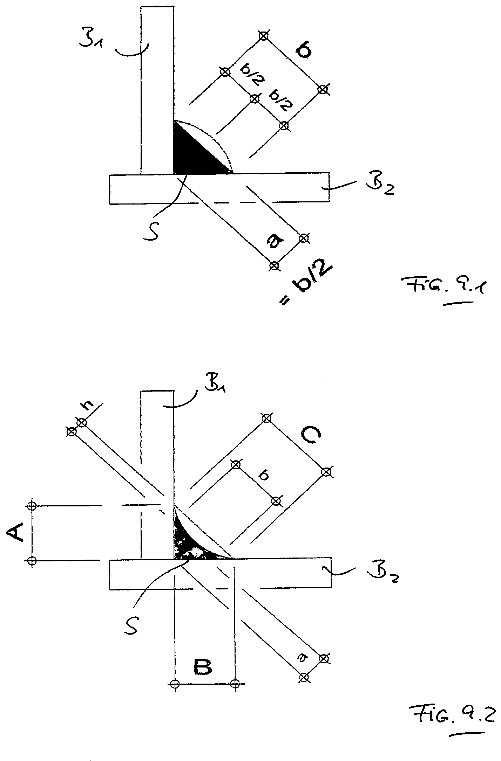

Zunächst einige geometrische Vorbetrachtungen im Zusammenhang mit einer Schweißnaht, wie sie in den Figuren 9.1 und 9.2 dargestellt sind. Figur 9.1 zeigt den häufig auftretenden Fall einer Schweißnaht S in Form einer Kehlnaht zwischen zwei senkrecht aufeinander stehenden Bauteilen B₁ und B₂. Die ideale Form der Schweißnaht S ist die Form eines gleichschenkligen, rechtwinkligen Dreiecks. Auch wenn die Schweißnaht S nach außen überwölbt ist, wie es in Figur 9.1 gestichelt dargestellt ist, besitzt der wirksame Querschnitt der Schweißnaht S weiterhin die Form des gleichschenkligen, rechtwinkligen Dreiecks.

Die Breite b der Schweißnaht S entspricht der Hypotenuse des Dreiecks, während die Dicke a der Schweißnaht S der Höhe des Dreiecks entspricht, wie es in Figur 9.1 dargestellt ist. Aus den geometrischen Zusammenhängen bei einem gleichschenkligen, rechtwinkligen Dreieck ergibt sich, dass die Höhe a des Dreiecks und somit die Dicke a der Schweißnaht S der halben Breite b der Schweißnaht entspricht, d.h. a=b/2.

In vielen Fällen wird jedoch die Schweißnaht S als unterwölbte Kehlnaht ausgeführt, wie es in Fig. 9.2 ersichtlich ist. Die wirksame Fläche der Schweißnaht S ist wiederum ein gleichschenkliges, rechtwinkliges Dreieck, dessen Breite b jedoch nicht direkt zu messen ist. Es wird deshalb für die Berechnung von einer theoretischen, größeren Schweißnaht in Form eines gleichschenkligen, rechtwinkligen Dreiecks ausgegangen (gestrichelt in Figur 9.2), von dem die Breite C in einfacher Weise abgegriffen werden kann. Damit ist auch die Höhe dieses größeren Dreiecks bekannt als C/2. Um die Größe der tatsächlich wirksamen Querschnittsform der unterwölbt geschweißten Schweißnaht S zu ermitteln, muss das Maß h der Unterwölbung gemessen werden, woraufhin dann die wirksame dreieckige Querschnittsfläche der Schweißnaht S aus deren Höhe a = C/2 - h und deren Breite b = 2a ermittelt werden kann.

Die erfindungsgemäße Schweißnahtlehre besitzt zwei gelenkig miteinander verbundene Arme, die relativ zueinander um eine Drehachse schwenkbar sind. Mittels einer 1. Haltevorrichtung können die Arme relativ zueinander festgelegt bzw. fixiert werden. Die Arme, die vorzugsweise an ihrem unteren Ende spitz zulaufen, dienen zur Messung der Breite der Schweißnaht. Die Arme werden relativ zueinander so gespreizt, dass jeweils einer der Arme mit seinem Messpunkt, der vorzugsweise am unteren Ende jedes Arms ausgebildet ist, im Eckpunkt der Breite b (siehe Figur 9.1) des Querschnitts der Schweißnaht angeordnet ist. In dieser Position wird die 1. Haltevorrichtung aktiviert und die beiden Arme werden relativ zueinander fixiert, so dass der Benutzer den Abstand der Messpunkte der Arme und somit die Breite b des Querschnitts der Schweißnaht an der 1. Skala ablesen kann. Die genauen Merkmale der erfindungsgemäßen Schweißnahtlehre sind im unabhängigen Anspruch 1 definiert.

Vorzugsweise ist am oberen Ende der Skalenplatte eine 2. Skala ausgebildet. Die Arme sind so aneinander angepasst, dass der Benutzer an der oberen 2. Skala die Höhe a des Schweißnahtquerschnittes ablesen kann, die genau der halben Breite b des Schweißnahtquerschnittes entspricht.

Ferner können am oberen Ende der beiden Arme jeweils ein vorzugsweise hornartiges Anlageelement ausgebildet sein. Die Anlageelemente sind so konfiguriert, dass der Abstand zwischen den beiden Anlageelementen dem halben Abstand zwischen den unteren Messpunkten der unteren Armabschnitte und somit der Höhe a des Schweißnahtquerschnittes entspricht. Ein Benutzer kann bei Bedarf die Höhe a des Schweißnahtquerschnittes direkt zwischen den beiden Anlageelementen abgreifen.

In bevorzugter Ausgestaltung der Erfindung ist vorgesehen, dass die Arme in scherenartiger, sich kreuzender Konfiguration angeordnet sind, wobei die Drehachse im Kreuzungsbereich verläuft. Die scherenartige Konfiguration der Arme erleichtert es einem Benutzer, die unteren Ende der Arme in den Eckpunkten der Breite der Schweißnaht anzusetzen.

Vorzugsweise ist die Drehachse von einem Achsenteil gebildet, auf der die Arme drehbar gelagert sind.

Die 1. Haltevorrichtung, mittels der die Arme relativ zueinander fixiert werden können, kann als Klemmvorrichtung ausgebildet sein. Vorzugsweise besitzt die 1. Haltevorrichtung eine 1. Klemmschraube.

In bevorzugter Ausgestaltung der Erfindung ist vorgesehen, dass die 1. Skala auf einer Skalenplatte ausgebildet ist, die an einem der Arme befestigt ist. In der Skalenplatte kann ein Führungsnut vorgesehen sein, die von einem vorzugsweise stiftförmigen Eingriffsteil durchgriffen ist, das an dem anderen Arm angebracht ist. Die Führungsnut dient zur Erzielung einer exakten Verstellbewegung der beiden Arme relativ zueinander.

In Weiterbildung der Erfindung kann vorgesehen sein, dass die 1. Klemmschraube, die die 1. Haltevorrichtung zur gegenseitigen Fixierung der Arme bildet, relativ zum Eingriffsteil verstellbar ist und insbesondere mit dem Eingriffsteil in Gewindeeingriff steht. Die 1. Klemmschraube ist dabei auf der dem Arm abgewandten Seite der Skalenplatte angeordnet, so dass die Skalenplatte zwischen der 1. Klemmschraube und dem Arm eingeklemmt wird. Damit ist die Skalenplatte relativ zu dem Arm fixiert, so dass auch der die Skalenplatte tragende Arm relativ zu dem das Eingriffsteil tragenden Arm fixiert ist.

Erfindungsgemäß ist ein Schubelement vorgesehen, das in einer Linearführung senkrecht zur Drehachse verstellbar ist. Das Schubelement, bei dem es sich beispielsweise um eine Schubstange handeln kann, kann in der Linearführung verstellt werden. Wenn die beiden Arme mit ihren Messpunkten an den Endpunkten der Breite des Schweißnahtquerschnittes angelegt und relativ zueinander fixiert sind, wird das Schubelement so verstellt, dass das Schubelement mit der Schweißnahtoberfläche in Anlage kommt. In dieser Position kann das Schubelement mittels einer 2. Haltevorrichtung relativ zur Linearführung festgelegt und fixiert werden. Bei der 2. Haltevorrichtung kann es sich um eine 2. Klemmschraube handeln. Dabei ist die Linearführung senkrecht zur Drehachse verstellbar und insbesondere schneidet sie diese auch.

Wenn die Schweißnaht die ideale Form eines gleichschenkligen, rechteckigen Dreiecks besitzt, liegt - im Querschnitt der Schweißnaht betrachtet - der untere Punkt des Schubelementes exakt auf der Verbindungslinie zwischen den beiden Messpunkten der Arme. In vielen Fällen ist der Querschnitt der Schweißnaht jedoch entweder überwölbt oder unterwölbt, so dass der untere Punkt des Schubelementes um das Wölbungsmaß des Schweißnahtquerschnittes versetzt zu der Verbindungslinie zwischen den beiden Messpunkten der Arme liegt. Nachdem das Schubelement mit seinem unteren Ende auf die Oberfläche der Schweißnaht aufgesetzt ist, wird es durch Anziehen der 2. Haltevorrichtung fixiert. Um das Wölbungsmaß abzulesen, kann ein Skalenträger vorgesehen sein, der vorzugsweise eine L-förmige Konfiguration mit einem horizontalen 1. Schenkel und einem senkrecht dazu verlaufenden 2. Schenkel besitzt. An dem 1. Schenkel kann ein plattenförmiges Skalenelement angebracht sein, auf dem eine 1. Mess-Skala ausgebildet ist, die sich senkrecht zum 1. Schenkel erstreckt. Die Schweißnahtlehre kann mit den unteren Enden der Arme und somit mit deren unteren Messpunkten auf eine Auflagefläche auf der Oberseite des 1. Schenkels des Skalenträgers im Bereich des Skalenelementes aufgesetzt werden. Das Maß der Überwölbung oder der Unterwölbung ergibt sich aus dem Abstand des unteren Endes des Schubelementes bzw. der Schubstange von der Verbindungslinie zwischen den beiden Messpunkten der Arme und kann vom Benutzer an der 1. Mess-Skala des Skalenelementes direkt abgelesen werden.

An dem 1. Schenkel des Skalenträgers kann zusätzlich eine sich in Längsrichtung des 1. Schenkels erstreckende 2. Mess-Skala für die Messung der Länge eines Schenkels eines ungleichschenkligen Schweißnahtquerschnittes und an dem vertikalen 2. Schenkel eine sich in Längsrichtung des 2. Schenkels erstreckende 3. Mess-Skala zur Messung der Länge des 2. Schenkels des ungleichschenkligen Querschnittes einer Schweißnaht ausgebildet sein. Darüber hinaus kann an dem Skalenträger und insbesondere auf der Rückseite des vertikalen 2. Schenkels eine 4. Mess-Skala ausgebildet sein.

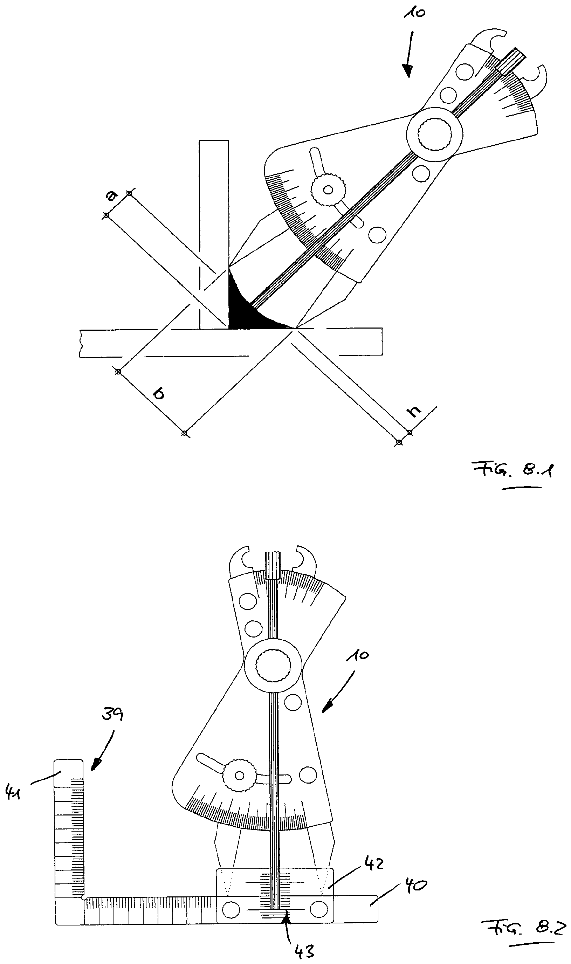

Das Schubelement sollte genau in der Mitte zwischen den beiden Messpunkten der Arme auf die Schweißnaht aufgesetzt werden. Da die Breite b (siehe Figur 8.1) des Schweißnahtquerschnittes je nach Anwendungsfall unterschiedlich ist, muss die Ausrichtung des Schubelementes entsprechend justiert werden. Zu diesem Zweck kann vorgesehen sein, dass die Linearführung, in der das Schubelement geführt ist, an einem Führungsteil ausgebildet ist, das relativ zu den Armen um die Drehachse schwenkbar ist.

Die 2. Haltevorrichtung, mit der das Schubelement relativ zur Linearführung fixiert werden kann, steht vorzugsweise mit dem Führungsteil in Eingriff. Wenn die 2. Haltevorrichtung von der 2. Klemmschraube gebildet ist, kann die 2. Klemmschraube mit dem Führungsteil in Gewindeeingriff stehen.

In Weiterbildung der Erfindung kann vorgesehen sein, dass das Führungsteil mit dem Achsenteil drehfest verbunden und insbesondere mit diesem einstückig ausgebildet ist.

Vorzugsweise kann das Führungsteil mit dem Achsenteil drehfest verbunden und insbesondere mit diesem einstückig ausgebildet ist.

Vorzugsweise kann das Führungsteil mittels einer 3. Haltevorrichtung relativ zu den Armen festgelegt und fixiert werden. Bei der 3. Haltevorrichtung kann es sich um eine 3. Klemmschraube handeln, die vorzugsweise mit dem Achsenteil in Gewindeeingriff steht.

Um das Maß der Überwölbung oder Unterwölbung der Schweißnaht zu ermitteln, kann in Weiterbildung der Erfindung ein Indikatorteil vorgesehen sein, das längs des Schubelementes linear verstellbar ist. Das Indikatorteil ist vorzugsweise mittels einer 4. Haltevorrichtung, bei der es sich um eine 4. Klemmschraube handeln kann, relativ zum Schubelement festlegbar und fixierbar. Zu diesem Zweck kann die 4. Klemmschraube mit dem Indikatorteil in Gewindeeingriff stehen.

Das Indikatorteil wirkt vorzugsweise mit einer 3. Skala zusammen, die beispielsweise an der Skalenplatte ausgebildet sein kann. An der 3. Skala kann die Position des Indikatorteils relativ zur Skalenplatte abgelesen werden.

Nachdem das Schubelement auf die Oberfläche der Schweißnaht aufgesetzt ist, wird es durch Anziehen der 2. Haltevorrichtung fixiert. Daraufhin verschiebt der Benutzer das Indikatorteil längs des Schubelementes in eine vorbestimmte Stellung relativ zu der 3. Skala und insbesondere in die Nullstellung der 3. Skala. In dieser Position wird das Indikatorteil durch Anziehen der 4. Haltevorrichtung fixiert. Daraufhin wird die 2. Haltevorrichtung gelöst und das Schubelement zusammen mit dem Indikatorteil soweit verschoben, bis das untere Ende des Schubelementes exakt in der Verbindungslinie zwischen den Messpunkten der beiden Arme liegt. Dies kann beispielsweise erreicht werden, indem die Schweißnahtlehre mit den unteren Messpunkten der Arme auf eine ebene Oberfläche aufgesetzt und dann das Schubelement bis zur Anlage mit dieser ebenen Oberfläche verschoben wird. In dieser Position wird das Schubelement durch Anziehen der 2. Haltevorrichtung wieder fixiert. Durch die Verschiebung des Schubelementes längs der Linearführung wird auch das Indikatorteil relativ zur 3. Skala verschoben. Wenn das Schubelement in seiner Soll-Position fixiert ist, kann der Benutzer an der 3. Skala ablesen, um welche Strecke das Indikatorteil und damit auch das Schubelement verschoben wurde. Dieses Maß entspricht dem Wölbungsmaß der Überwölbung oder Unterwölbung des Schweißnahtquerschnitts. In einer alternativen Ausgestaltung der Erfindung kann ein Stützelement vorzugsweise in Form eines Stützstabes vorgesehen sein, der linear verschieblich in einer weiteren Linearführung gelagert ist, die an einem der Arme und vorzugsweise an demjenigen Arm angebracht ist, der die Skalenplatte trägt. Dabei kann eine 5. Haltevorrichtung vorgesehen sein, mittels der das Stützelement bzw. der Stützstab in der weiteren Linearführung festgelegt und insbesondere festgeklemmt werden kann. Die 5. Haltevorrichtung kann von einer Klemmschraube gebildet sein.

Das Stützelement bzw. der Stützstab kann dazu dienen, zusammen mit den beiden unteren Messpunkten der Arme die insbesondere an einer Schweißnaht mit einem ungleichschenkligen Querschnitt vorhandenen Geometrien abzugreifen und auf eine Auswertevorrichtung, beispielsweise den genannten Skalenträger zu übertragen, so dass sich dort die wesentlichen geometrischen Werte der Schweißnaht ablesen lassen.

Das Stützelement bzw. der Stützstab verläuft mit seiner Längsachse vorzugsweise unter einem Winkel α von 45° zur Längsachse des ihm tragenden Arms.

Weitere Einzelheiten und Merkmale der Erfindung sind aus der folgenden Beschreibung von Ausführungsbeispiels unter Bezugnahme auf die Zeichnung ersichtlich. Es zeigen:
- Fig. 1: eine perspektivische Ansicht einer Schweißnahtlehre gemäß einem 1. Ausführungsbeispiel der Erfindung,
- Fig. 2: eine Vorderansicht der Schweißnahtlehre gemäß Figur 1,
- Fig. 3: eine Rückansicht der Schweißnahtlehre gemäß Figur 1,
- Fig. 4: eine perspektivische Schnittdarstellung der Schweißnahtlehre gemäß Figur 1,
- Fig. 5: die Schweißnahtlehre gemäß Figur 1 bei Ermittlung der Breite eines idealen Schweißnaht-Querschnitts,
- Fig. 6.1 und 6.2: einzelne Phasen der Ermittlung der Abmessungen des Querschnitts einer überwölbten Schweißnaht mit der Schweißnahtlehre gemäß Fig. 1,
- Fig. 7.1: einen Skalenträger in perspektivischer Vorderansicht,
- Fig. 7.2: den Skalenträger gemäß Fig. 7.1 in perspektivischer Rückansicht,
- Fig. 8.1 und 8.2: einzelne Phasen der Ermittlung der Abmessungen des Querschnitts einer unterwölbten Schweißnaht mit der Schweißnahtlehre gemäß Fig. 1
- Fig. 9.1 und 9.2: die geometrischen Verhältnisse an einer Schweißnaht,
- Fig. 10: eine perspektivische Ansicht einer Schweißnahtlehre gemäß einem 2. Ausführungsbeispiel der Erfindung,
- Fig. 11: eine Vorderansicht der Schweißnahtlehre gemäß Figur 10,
- Fig. 12: eine Rückansicht der Schweißnahtlehre gemäß Figur 10,
- Fig. 13: eine perspektivische Schnittdarstellung der Schweißnahtlehre gemäß Figur 10,
- Fig. 14: die Schweißnahtlehre gemäß Figur 10 bei Ermittlung der Breite eines idealen Schweißnaht-Querschnitts,
- Fig. 15.1, 15.2, 15.3: einzelne Phasen der Ermittlung der Abmessungen des Querschnitts einer überwölbten Schweißnaht mit der Schweißnahtlehre gemäß Figur 10,
- Fig. 16.1, 16.2, 16.3: einzelne Phasen der Ermittlung der Abmessungen des Querschnitts einer unterwölbten Schweißnaht mit der Schweißnahtlehre gemäß Figur 10,
- Fig. 17: eine perspektivische Ansicht einer Schweißnahtlehre gemäß einem 3. Ausführungsbeispiel der Erfindung,
- Fig. 18: eine Vorderansicht der Schweißnahtlehre gemäß Fig. 17,
- Fig. 19: eine Rückansicht der Schweißnahtlehre gemäß Fig. 17,
- Fig. 20: eine perspektivische Schnittdarstellung der Schweißnahtlehre gemäß Fig. 17 und
- Fig. 21.1, 21.2, 21.3 und 21.4: einzelne Phasen der Ermittlung der Abmessungen des Querschnitts einer ungleichschenkligen Schweißnaht mit einer Schweißnahtlehre gemäß Fig. 17.

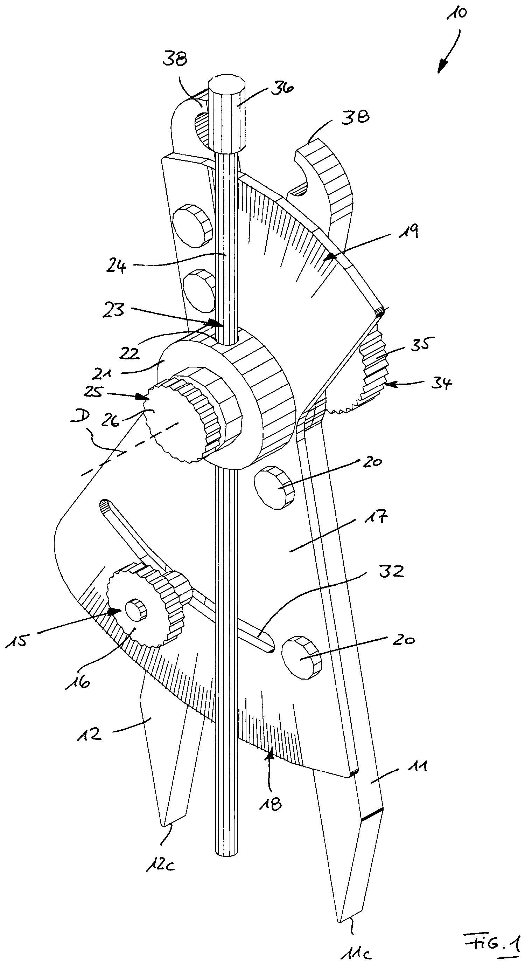

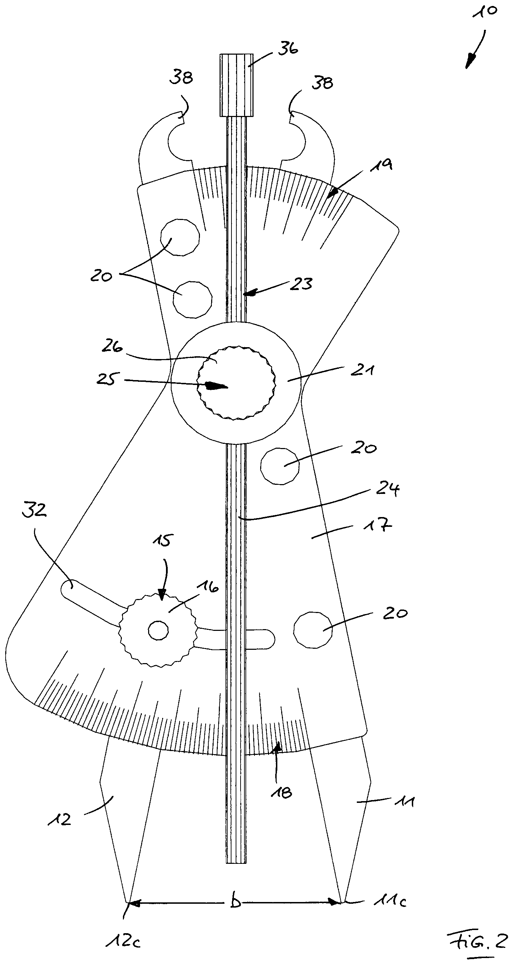

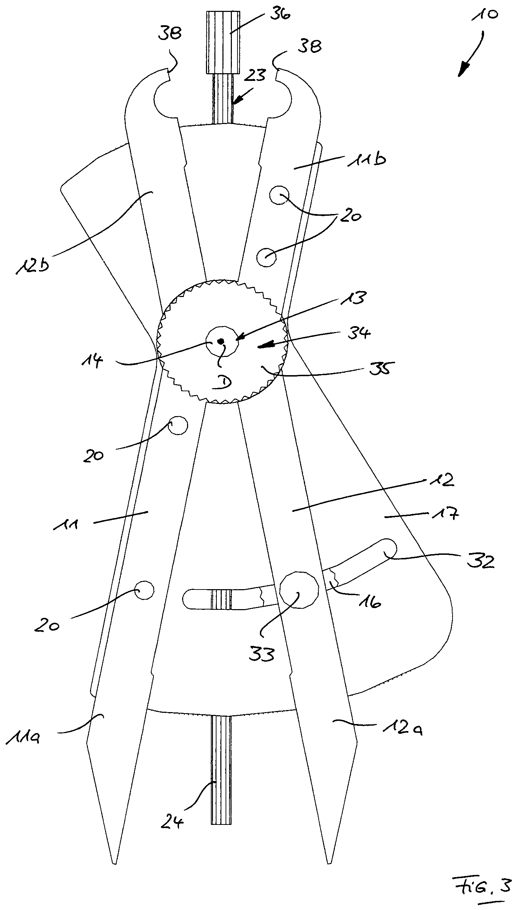

Die Figuren 1 bis 4 zeigen ein 1. Ausführungsbeispiel einer Schweißnahtlehre 10 zur Messen der Abmessungen einer Schweißnaht S mit zwei gelenkig miteinander verbundenen Armen 11 und 12, die in scherenartiger, sich kreuzender Konfiguration angeordnet sind. Im Kreuzungsbereich der beiden Arme 11 und 12 sind diese an einem Gelenk 13 auf einem zapfenartigen Achsenteil 14 um eine Drehachse D drehbar gelagert. Der Kreuzungsbereich unterteilt die Arme 11, 12 jeweils in einen unteren Armabschnitt 11a, 12a und einen oberen Armabschnitt 11b, 12b.

An dem einen Arm 11 ist eine Skalenplatte 17 über Befestigungsschrauben 20 angebracht. Die Skalenplatte 17 ist von dem Achsenteil 14 durchdrungen und schwenkt zusammen mit dem einen Arm 11. In der Skalenplatte 17 ist eine sich im wesentlichen konzentrisch zum Achsenteil 14 bzw. zur Drehachse D erstreckende kulissenartige Führungsnut 32 ausgebildet. An dem unteren Armabschnitt 12a des anderen Arms 12 ist ein stiftartiges Eingriffsteil 33 befestigt, das die Führungsnut 32 durchgreift. Während der Relativschwenkung zwischen den beiden Armen 11 und 12 läuft das Eingriffsteil 33 die Führungsnut 32 entlang.

Auf der den Armen 11 und 12 abgewandten Seite der Skalenplatte 17 ist auf das stiftartige Eingriffsteil 33 eine 1. Klemmschraube 16 aufgesetzt, die mit dem Eingriffsteil 33 in Gewindeeingriff steht. Die 1. Klemmschraube 16 bildet eine 1. Haltevorrichtung 15 und kann durch Drehung gegen die Skalenplatte 17 bewegt werden, so dass die Skalenplatte 17 zwischen dem anderen Arm 12 und der 1. Klemmschraube 16 eingeklemmt wird. Dadurch können die beiden Arme 11 und 12 in ihrer relativen Position festgelegt und fixiert werden.

Das Achsenteil 14 ist auf seiner den Armen 11 und 12 abgewandten Seite einstückig mit einem blockartigen Führungsteil 21 versehen. Das Führungsteil 21 besitzt eine Linearführung 22 in Form einer Bohrung, in die ein Schubelement 23 in Form einer Schubstange 24 verschieblich eingesetzt ist. Die Linearführung 22 verläuft senkrecht zur Drehachse D und schneidet diese. Dem Führungsteil 21 ist eine 2. Haltevorrichtung 25 in Form einer 2. Klemmschraube 26 zugeordnet, die in eine radial zur Linearführung verlaufende Bohrung eingeschraubt werden kann und dadurch die in der Linearführung 22 befindliche Schubstange 24 festklemmt.

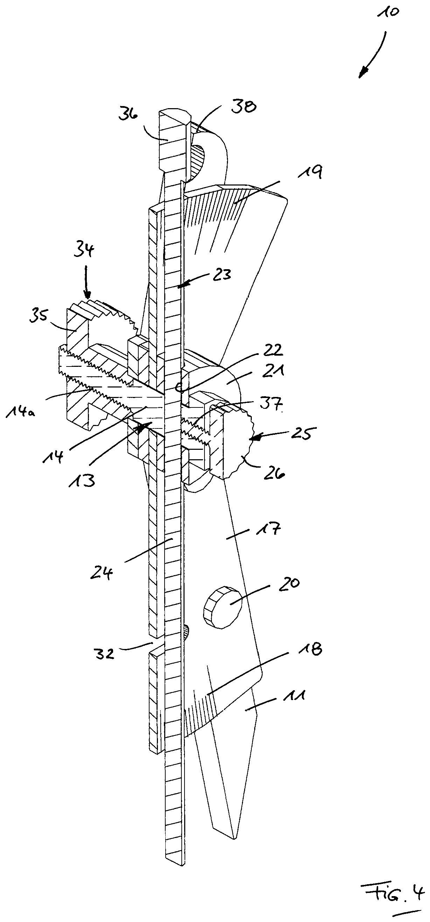

Wie Figur 4 zeigt, durchgreift das mit dem Führungsteil 21 fest verbundene Achsenteil 14 die Skalenplatte 17 und die beiden Arme 11 und 12 und steht auf der dem Führungsteil 21 abgewandten Seite der Arme 11 und 12 mit einem Gewindeabschnitt 14a hervor. Auf den Gewindeabschnitt 14a ist eine 3. Klemmschraube 35 aufgeschraubt, die eine 3. Haltevorrichtung 34 bildet und mit dem Achsenteil 14 in Gewindeeingriff steht. Durch Anziehen der 3. Klemmschraube 35 werden das Führungsteil 21, die Skalenplatte 17 und die beiden Arme 11 und 12 zusammengespannt und dadurch in ihrer Position fixiert. Bei gelöster 3. Klemmschraube 35 kann das Führungsteil 21 um die Drehachse D geschwenkt und somit die Linearführung 22 so ausgerichtet werden, dass die Schubstange 24 genau auf der Winkelhalbierenden des zwischen den beiden Armen 11 und 12 gebildeten Winkels verläuft.

Am oberen Ende der Schubstange 24 ist ein als Handgriff dienender Kopf 36 angeordnet.

Auf der Vorderseite der Skalenplatte 17 sind zwei Skalen angeordnet. Eine im unteren Bereich der Skalenplatte 17 angeordnete 1. Skala 18 zeigt an, welchen Abstand zwei untere Messpunkte 11c und 12c am unteren Ende der unteren Armabschnitte 11a und 12a zueinander aufweisen. Wenn die Messpunkte 11c und 12c an den Randpunkten der Breite b des Schweißnahtquerschnittes (siehe Figur 9.1) angelegt sind, kann der Benutzer an der 1. Skala 18 die Breite b der Schweißnaht ablesen.

Am oberen Ende der Skalenplatte 17 ist eine 2. Skala 19 ausgebildet. Die Arme 11 und 12 sind so aneinander angepasst, dass der Benutzer an der oberen 2. Skala die Höhe a des Schweißnahtquerschnittes (siehe Figur 9.1) ablesen kann, die genau der halben Breite b entspricht.

Am oberen Ende der beiden oberen Armabschnitte 12a und 12b ist jeweils ein hornartiges Anlageelement 38 ausgebildet. Die Anlageelemente 38 sind so konfiguriert, dass der Abstand zwischen den beiden Anlageelementen 38 dem halben Abstand zwischen den unteren Messpunkten 11c und 12c der unteren Armabschnitte 11a und 12b und somit der Höhe a des Schweißnahtquerschnittes (siehe Figur 9.1) entspricht. Ein Benutzer kann somit bei Bedarf die Höhe a des Schweißnahtquerschnittes direkt zwischen den beiden Anlageelementen 38 abgreifen.

Im Folgenden wird die Funktionsweise der Schweißnahtlehre 10 gemäß Fig. 1 an einigen Beispielen erläutert.

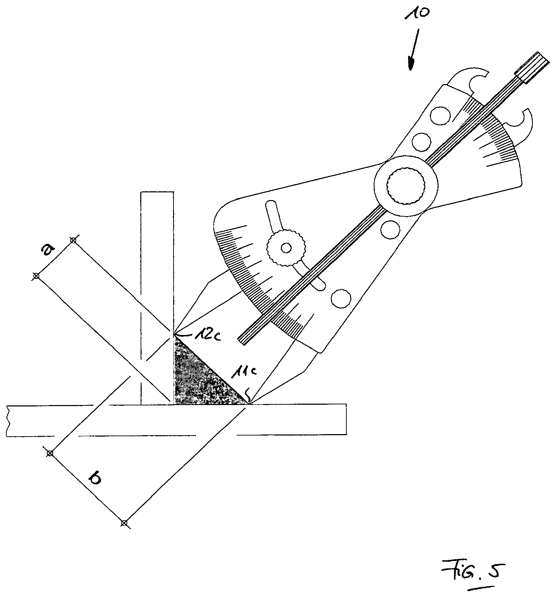

Figur 5 zeigt zwei senkrecht aufeinander stehende Bauteile B₁ und B₂, zwischen denen eine Schweißnaht S in Form einer sogenannten Kehlnaht ausgebildet ist. Im dargestellten Ideal-Fall besitzt die Schweißnaht S einen Querschnitt in Form eines gleichschenkligen, rechtwinkligen Dreiecks. Um diese Schweißnaht S zu vermessen, werden die Arme 11 und 12 der Schweißnahtlehre 10 so eingestellt, dass die unteren Messpunkte 11c, 12c der Arme 11, 12 jeweils in einem Eckpunkt der Breite b des Schweißnahtquerschnittes, d.h. in Eckpunkten der Hypotenuse des rechtwinkligen Dreieckes angeordnet sind, wie es in Figur 5 dargestellt ist. Der Benutzer zieht dann die 1. Klemmschraube 16 fest, wodurch die Arme 11 und 12 relativ zueinander fixiert sind. Der Benutzer kann dann an der 1. Skala 18 die Breite b der Schweißnaht ablesen. Die Höhe a der Schweißnaht wird entweder ermittelt zu a=b/2. Sie ist jedoch auch an der oberen 2. Skala 19 ablesbar oder zwischen den oberen Anlageelementen 38 direkt abgreifbar.

Da die Schweißnaht S in dem in Figur 5 dargestellten Ausführungsbeispiel keine Überwölbung oder Unterwölbung besitzt, sind weitere Messungen nicht notwendig.

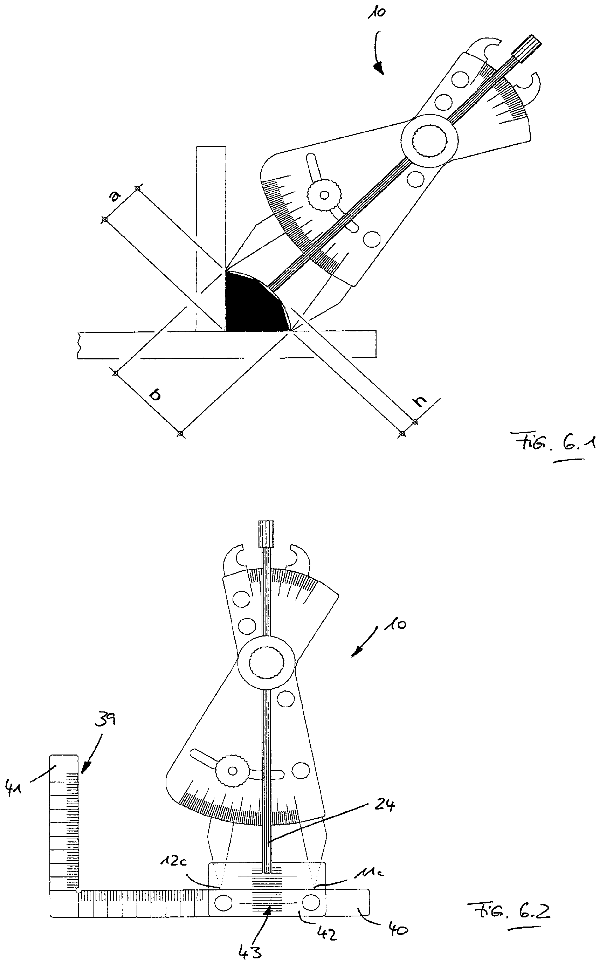

Figur 6.1 zeigt ein dem Ausführungsbeispiel gemäß Figur 5 ähnliches Ausführungsbeispiel, das sich davon lediglich dadurch unterscheidet, dass die Schweißnaht S eine Überwölbung mit der Höhe h besitzt.

Zunächst wird die Schweißnahtlehre 10 in der genannten Weise mit den unteren Messpunkten 11c und 12c der Arme 11 und 12 in die Eckpunkte der Breite b des Querschnittes der Schweißnaht S gesetzt und die Arme 11, 12 werden dann durch Anziehen der 1. Klemmschraube 16 relativ zueinander fixiert. Der Benutzer kann dann die Werte für die Breite b des Schweißnahtquerschnitts und für die Höhe a (ohne Überwölbung) des Schweißnahtquerschnittes in genannter Weise ablesen.

Um das Maß der Überwölbung h zu ermitteln, werden die 2. Klemmschraube 26 und die 3. Klemmschraube 35 gelöst und die Schubstange 24 wird auf der Oberfläche der Schweißnaht S genau in der Winkelhalbierenden zwischen den beiden Armen 11 und 12 positioniert. Daraufhin wird die 2. Klemmschraube 26 angezogen, die die Schubstange 24 relativ zum Führungsteil 21 fixiert, und auch die 3. Klemmschraube 35 wird festgezogen, die die Drehung des Führungsteils 21 relativ zu den Armen 11, 12 unterbindet.

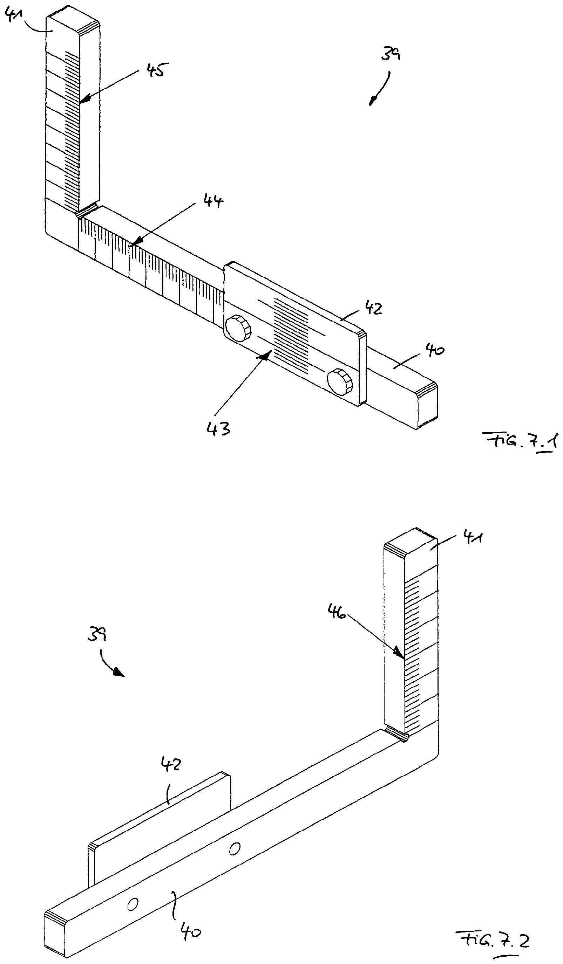

Die Schweißnahtlehre 10 wird dann abgenommen und an einen Skalenträger 39 angelegt, der in den Figuren 7.1 und 7.2 dargestellt ist. Der Skalenträger 39 besitzt eine L-Konfiguration mit einem horizontalen 1. Schenkel 40 und einem senkrecht dazu verlaufenden 2. Schenkel 41. An dem 1. Schenkel 40 ist ein plattenförmiges Skalenelement 42 angebracht, auf dem eine 1. Mess-Skala 43 ausgebildet ist, die sich senkrecht zum 1. Schenkel 40 erstreckt.

Ferner ist am 1. Schenkel 40 noch eine sich in Längsrichtung des 1. Schenkels 40 erstreckende 2. Mess-Skala 44 ausgebildet, deren Funktion später erläutert wird.

An dem vertikalen 2. Schenkel 41 sind auf der Vorderseite eine sich in Längsrichtung des 2. Schenkels 41 erstreckende 3. Mess-Skala 45 und auf der Rückseite sich ebenfalls in Längsrichtung des 2. Schenkels 41 erstreckende 4. Mess-Skala 46 ausgebildet, deren Funktion ebenfalls später erläutert wird.

Die Schweißnahtlehre 10 wird mit den unteren Enden der Arme 11 und 12 und somit mit den Messpunkten 11c und 12c auf eine Auflagefläche auf der Oberseite des 1. Schenkels 40 im Bereich des Skalenelementes 42 aufgesetzt, wie es in Figur 6.2 gezeigt ist. Das Maß der Überwölbung h ergibt sich aus dem Abstand des unteren Endes der Schubstange 24 von der Verbindungslinie zwischen den beiden Messpunkten 11c und 12c und kann vom Benutzer an der 1. Mess-Skala 43 des Skalenelementes 42 abgelesen werden.

In der gleichen Weise geschieht die Bestimmung des Maßes einer Unterwölbung h, wie es in Figur 8.1 dargestellt ist. In diesem Fall steht das untere Ende der Schubstange 24 nach den vorgenannten Messungen nach unten über die Verbindungslinie zwischen den unteren Messpunkten 11c und 12c der Arme 11 und 12 hervor. Die Schweißnahtlehre 10 wird in dieser Position in genannter Weise fixiert und dann wieder auf die Auflagefläche auf der Oberseite des 1. Schenkels 40 des Skalenteils 39 aufgesetzt, so dass sich das untere Ende der Schubstange 34 im Bereich der 1. Mess-Skala 43 des Skalenelementes 42 befindet und das Maß h der Unterwölbung direkt an der 1. Mess-Skala 43 des Skalenelementes 42 abgelesen werden kann, wie es in Figur 8.2 dargestellt ist.

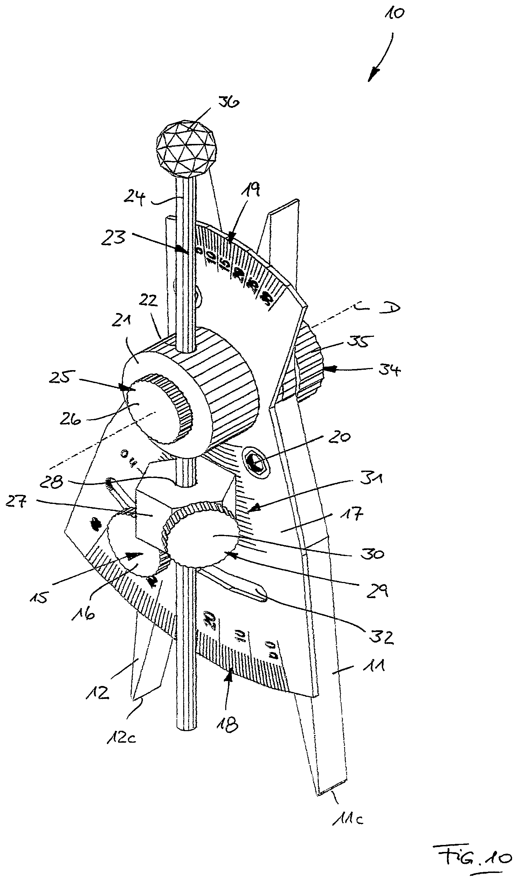

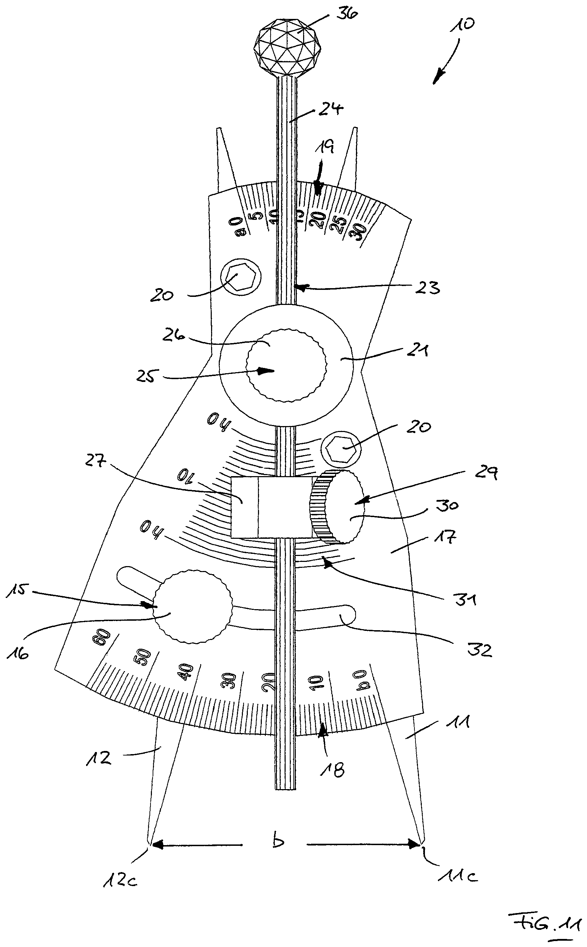

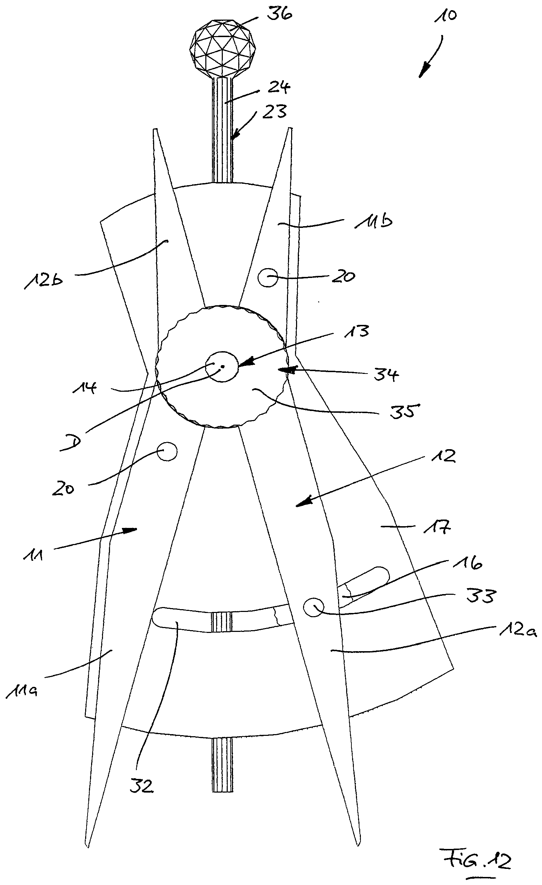

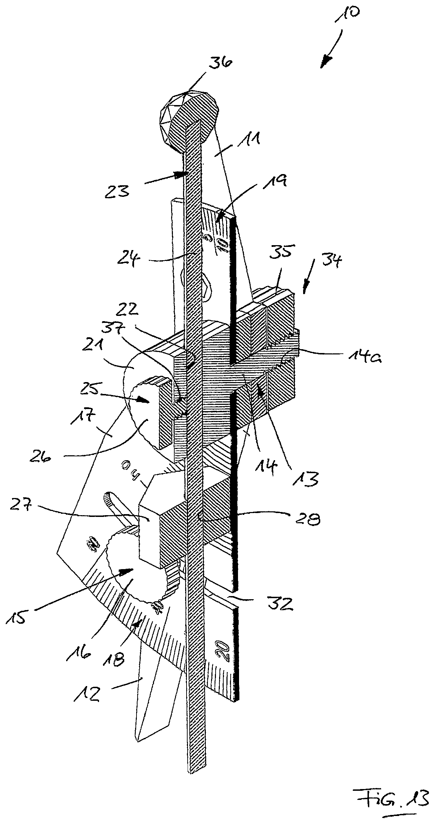

Die Figuren 10 bis 13 zeigen eine Weiterbildung der Schweißnahtlehre nach Figur 1 gemäß einem 2. Ausführungsbeispiel, wobei gleichartige Bauteile mit den gleichen Bezugszeichen versehen sind.

Die Schweißnahtlehre 10 gemäß den Figuren 10 bis 13 unterscheidet sich von der Schweißnahtlehre gemäß Figur 1 im wesentlichen in folgenden Merkmalen:
Auf der Schubstange 24 sitzt ein Indikatorteil 27, das eine Durchgangsbohrung 28 aufweist, die von der Schubstange 24 durchgriffen ist. Das Indikatorteil 27 ist längs der Schubstange 24 verschieblich und weist eine 4. Klemmschraube 30 auf, die eine 4. Haltevorrichtung 29 bildet. Mittels der 4. Klemmschraube 30 kann das Indikatorteil 27 relativ zur Schubstange 24 festgelegt und fixiert werden.

In der Mitte der Skalenplatte 17 ist eine 3. Skala 31 ausgebildet, an der der Benutzer eine Verschiebung der Schubstange 24 und somit des Indikatorteils 27 relativ zur Skalenplatte 17 ablesen kann.

Im Folgenden wird die Funktionsweise der Schweißnahtlehre 10 gemäß den Figuren 10 bis 13 an einigen Beispielen erläutert.

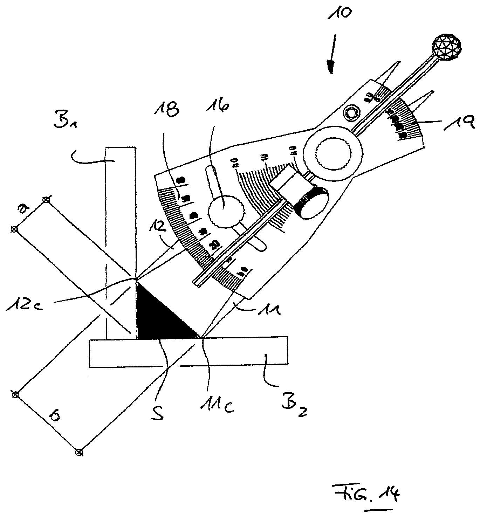

Figur 14 zeigt zwei senkrecht aufeinander stehende Bauteile B₁ und B₂, zwischen denen eine Schweißnaht S in Form einer sogenannten Kehlnaht ausgebildet ist. Im dargestellten Fall besitzt die Schweißnaht S einen Querschnitt in Form eines gleichwinkligen, rechtwinkligen Dreiecks. Um diese Schweißnaht S zu vermessen, werden die Arme 11 und 12 der Schweißnahtlehre 10 so eingestellt, dass die unteren Messpunkte 11c, 12c, der Arme 11, 12 jeweils in einem Eckpunkt der Breite b des Schweißnahtquerschnittes, d.h. in den Eckpunkten der Hypotenuse des rechtwinkligen Dreiecks angeordnet sind, wie es in Figur 14 dargestellt ist. Der Benutzer zieht dann die 1. Klemmschraube 16 fest, wodurch die Arme 11 und 12 relativ zueinander fixiert sind. An der 1. Skala 18 kann der Benutzer dann die Breite b der Schweißnaht ab lesen.

Die Höhe a der Schweißnaht wird entweder ermittelt zu a=b/2, sie ist jedoch auch an der oberen 2. Skala 19 ablesbar.

Da die Schweißnaht S in dem in Figur 14 dargestellten Ausführungsbeispiel keine Überwölbung oder Unterwölbung besitzt, sind weitere Messungen nicht notwendig.

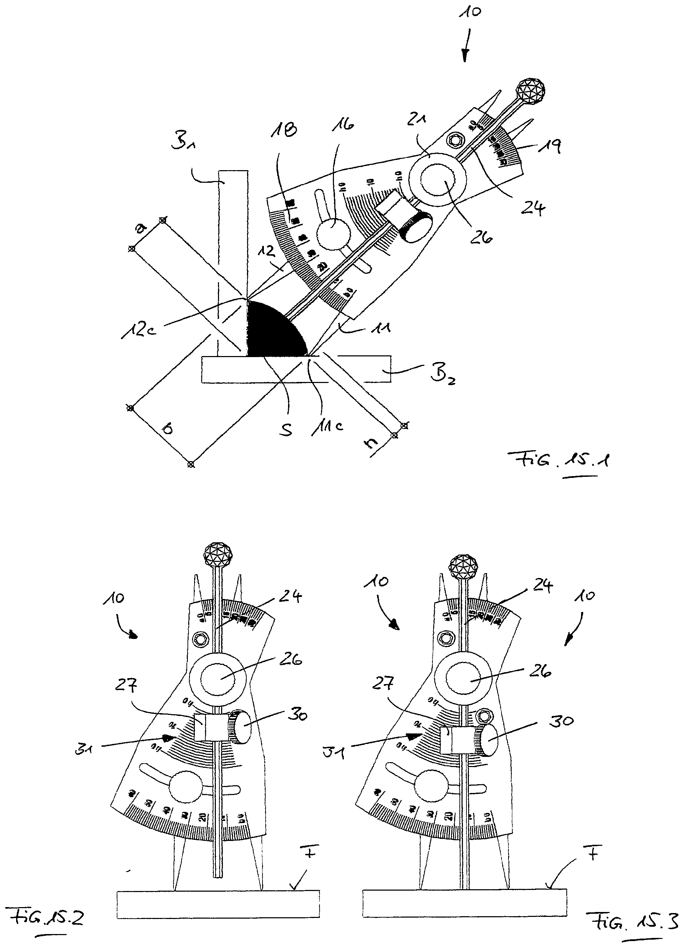

Figur 15.1 zeigt ein dem Ausführungsbeispiel gemäß Figur 14 ähnliches Ausführungsbeispiel, das sich davon lediglich dadurch unterscheidet, dass die Schweißnaht S eine Überwölbung mit der Höhe h besitzt.

Zunächst wird die Schweißnahtlehre in der genannten Weise mit den unteren Messpunkten 11c und 12c der Arme 11 und 12 in die Eckpunkte der Breite b des Querschnitts der Schweißnaht S gesetzt und die Arme 11, 12 werden dann durch Anziehen der 1. Klemmschraube 16 relativ zueinander fixiert. Der Benutzer kann dann die Werte für die Breite b des Schweißnahtquerschnittes und für die Höhe a (ohne Überwölbung) des Schweißnahtquerschnittes in genannter Weise ablesen.

Um das Maß der Überwölbung h zu ermitteln, werden die 2. Klemmschraube 26 und die 3. Klemmschraube 35 gelöst und die Schubstange 24 wird auf der Oberfläche der Schweißnaht S genau in der Winkelhalbierenden zwischen den beiden Armen 11 und 12 positioniert. Dann wird die 2. Schraube 26 angezogen, die die Schubstange relativ zum Führungsteil 21 fixiert, und auch die 3. Klemmschraube 35 wird festgezogen, die die Drehung des Führungsteils relativ zu den Armen 11 und 12 unterbindet.

Die Schweißnahtlehre 10 wird dann abgenommen und auf eine ebene Auflagefläche F aufgestellt, wie es in Figur 15.2 gezeigt ist. Die 4. Klemmschraube 30 des Indikatorteils 27 wird gelöst und das Indikatorteil 27 wird längs der Schubstange 24 so verschoben, dass es eine definierte Ausgangsstellung einnimmt, in der eine Messlinie des Indikatorteils 27 in einer Null-Position der 3. Skala 31 angeordnet ist. Nachdem das Indikatorteil 27 durch Anziehen der 4. Klemmschraube 30 relativ zur Schubstange 24 wieder fixiert ist, wird die 2. Klemmschraube 26 gelöst, so dass die Schubstange 24 zusammen mit dem Indikatorteil 27 soweit nach unten verschoben wird, bis das untere Ende der Schubstange 24 auf der ebenen Oberfläche F aufliegt, wie es in Figur 15.3 gezeigt ist. Anschließend wird die Schubstange 24 in dieser Position durch Anziehen der 3. Klemmschraube 26 fixiert und der Benutzer kann an der 2. Skala 31 ablesen, welchen Weg das Indikatorteil 27 bei der durchgeführten Verschiebung zurückgelegt hat. Dieser Weg entspricht der Überwölbung h der Schweißnaht S.

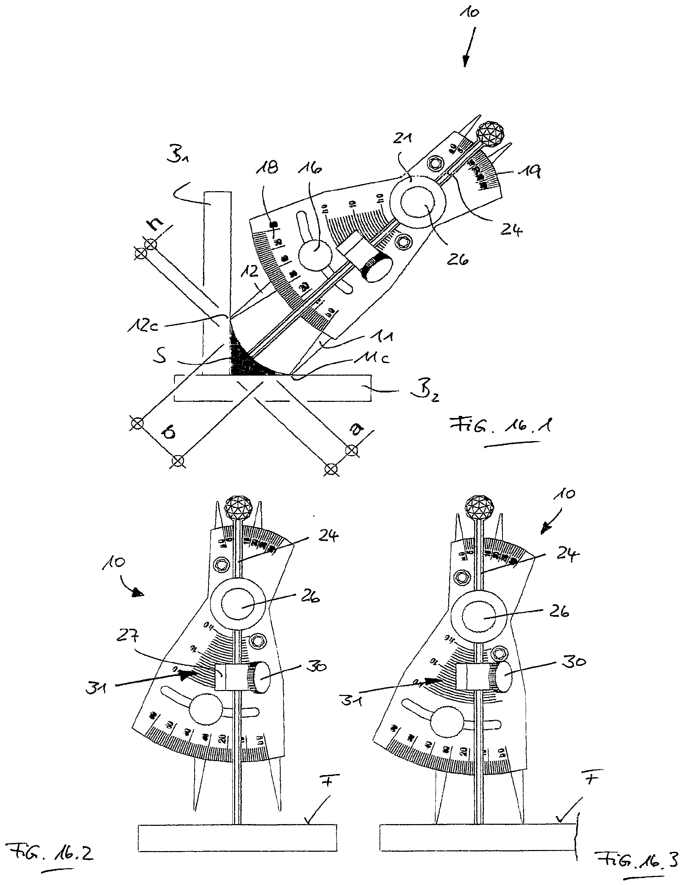

Grundsätzlich in der gleichen Weise geschieht die Bestimmung des Maßes einer Unterwölbung h, wie es in Figur 16.1 dargestellt ist. In diesem Fall steht die Schubstange 24 nach den vorgenannten Messungen nach unten über die Arme 11 und 12 hervor. Die Schweißnahtlehre 10 wird in dieser Position fixiert und dann auf eine ebene Oberfläche F gestellt (siehe Figur 16.2), woraufhin die Klemmung der 2. Klemmschraube 26 gelöst wird, so dass die Arme 11 und 12 und die daran befestigten Bauteile relativ zur Schubstange 24 nach unten verschoben werden, bis die untere Enden der Arme 11 und 12 auf der ebenen Oberfläche F aufliegen. An der 3. Skala 31 kann mittels des Indikatorteils 27 das Maß der Verschiebung und dementsprechend das Maß h der Unterwölbung ermittelt werden.

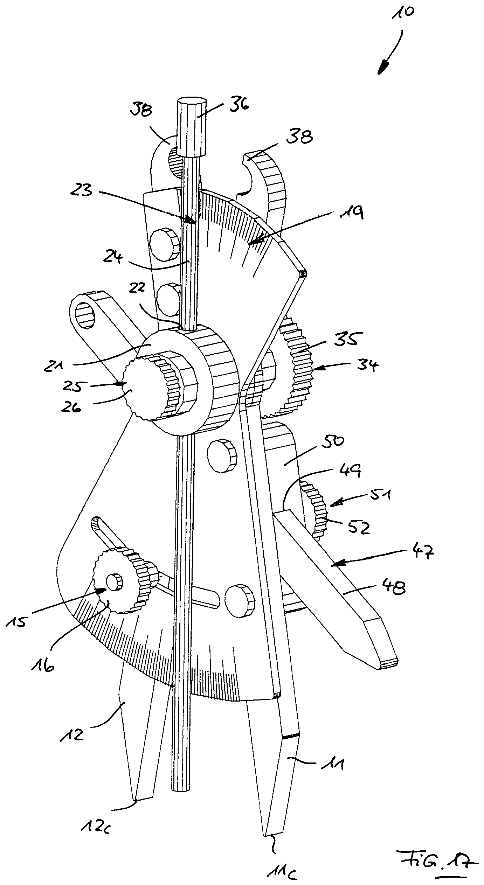

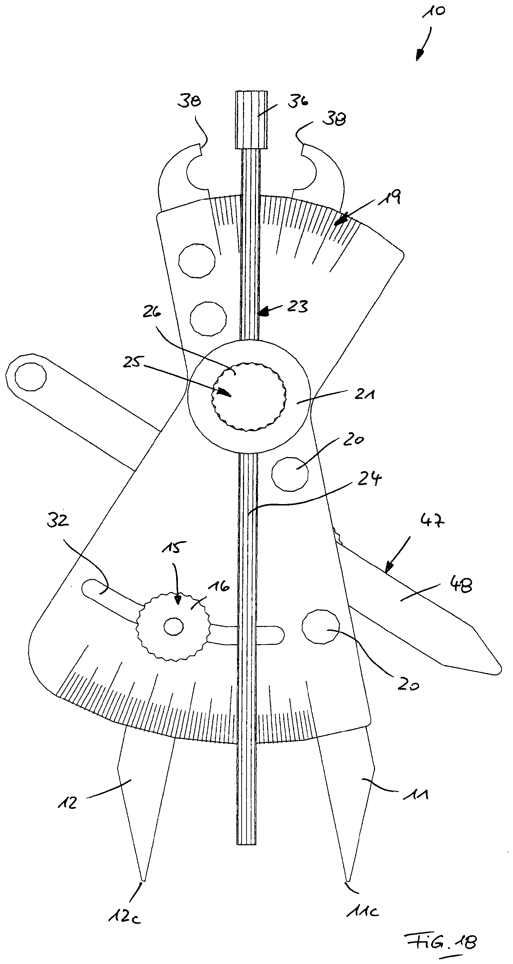

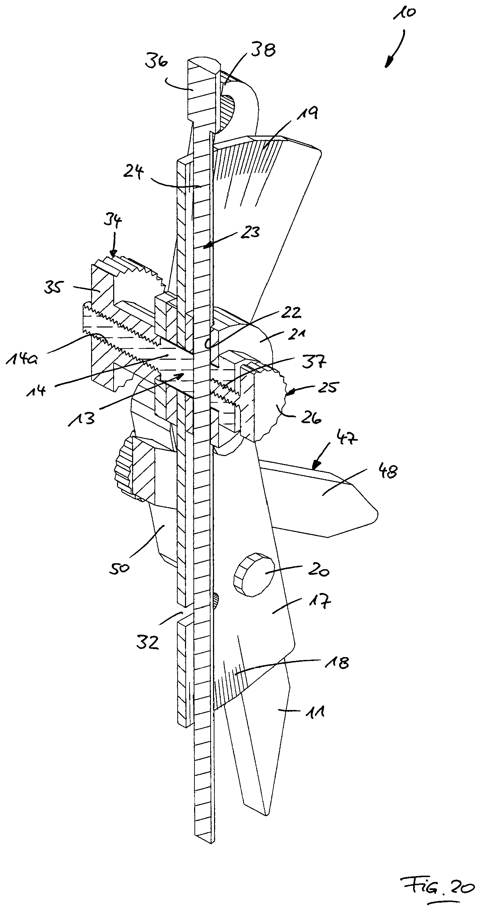

Die Figuren 17 bis 20 zeigen eine weitere Abwandlung der Schweißnahtlehre gemäß einem 3. Ausführungsbeispiel. Auch in diesem Fall sind gleichartige Bauteile mit den gleichen Bezugszeichen versehen. Das 3. Ausführungsbeispiel der Schweißnahtlehre gemäß den Figuren 17 bis 20 zeichnet sich dadurch aus, dass ein zusätzliches Stützelement 47 in Form eines Stützstabes 48 vorgesehen ist, der in einer weiteren Linearführung 49 linear verstellbar aufgenommen ist. Die Linearführung 49 ist in einem Führungsblock 50 ausgebildet, der an demjenigen Arm 11 angebracht ist, der die Skalenplatte 17 trägt. Dem Führungsblock 50 ist eine 5. Haltevorrichtung 51 in Form einer 5. Klemmschraube 52 zugeordnet, mit der der Stützstab 48 in der Linearführung 49 geklemmt und somit fixiert werden kann.

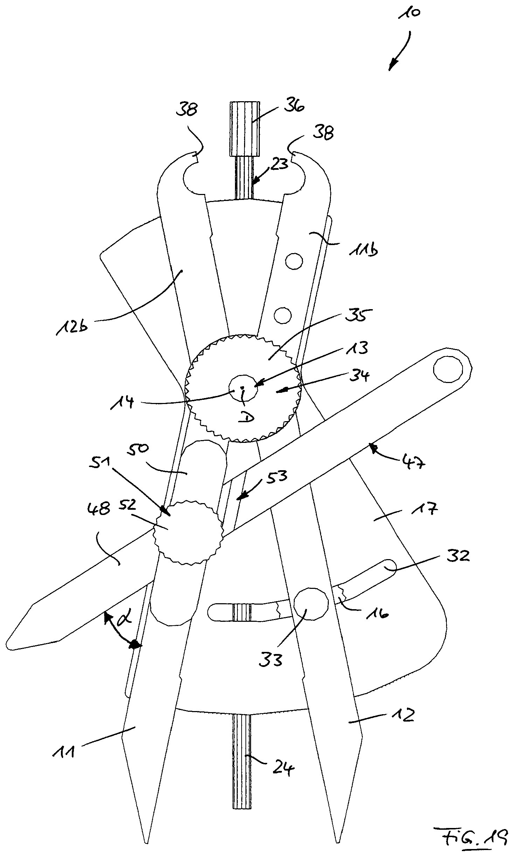

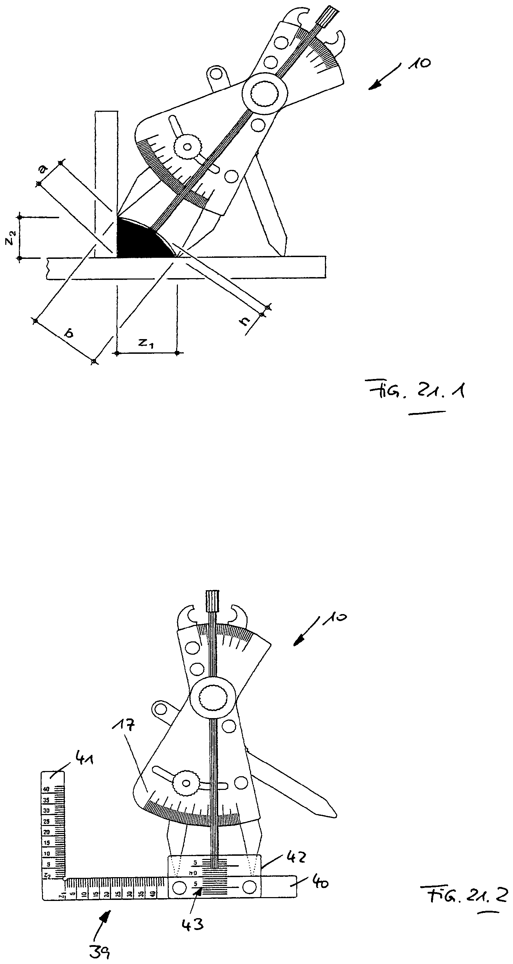

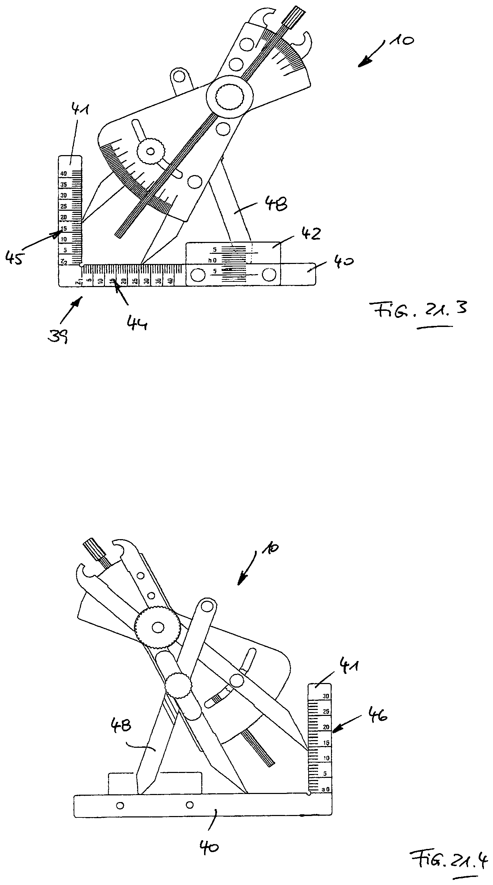

Wie Figur 19 zeigt, verläuft der Stützstab 48 unter einem Winkel α von 45° zu dem Arm 11. Der Stützstab 48 kommt insbesondere bei der Vermessung von Schweißnähten mit einem ungleichschenkligen Querschnitt zum Einsatz, was im Folgenden anhand der Figuren 21.1 bis 21.4 kurz erläutert werden soll.

Eine Schweißnaht mit einem ungleichschenkligen Querschnitt besitzt gemäß Figur 21.1 einen 1. Schenkel der Länge z₁ und einen 2. Schenkel der Länge z₂ sowie eine Überwölbung h. Zur Vermessung der Schweißnaht werden die unteren Messpunkte 11c und 12c der Arme 11 und 12 wieder in den Eckpunkten der Schweißnaht angesetzt, wie es bereits erläutert wurde. Desweiteren wird die 5. Klemmschraube 52 gelöst und der Stützstab 48 wird soweit verschoben, dass er mit seinem vorderen Ende auf der Oberfläche des Bauteils P₂ nahe der Schweißnaht aufliegt. Die Schubstange 24 wird dann in genannter Weise mit der Oberfläche der Schweißnaht in Anlage gebracht. Dieser Zustand ist in Figur 21.1 dargestellt.

Das Maß der Überhöhung h der Schweißnaht kann dann in bereits geschilderter Weise an der 1. Mess-Skala 43 des Skalenelementes 42 des Skalenträgers 19 abgelesen werden, wie es in Figur 21.2 dargestellt ist und bereits in Verbindung mit Figur 6.2 erläutert wurde.

Zur Ermittlung der Schenkellängen z₁ und z₂ wird die Schweißnahtlehre 10 so auf dem Skalenträger 39 aufgesetzt, dass der untere Punkt 11c des Arms 11 und der untere Punkt des Stützstabs 48 auf der Oberseite des 1. Schenkels 40 des Skalenträgers 39 aufliegen, während der untere Punkte 12c des anderen Arms 12 an dem 2. Schenkel 41 des Skalenteils 39 anliegt. Dieser Zustand ist in Figur 21.3 dargestellt. An der 2. Mess-Skala 44 kann die Länge des Schenkels z₁ und an der 3. Mess-Skala 45 des 2. Schenkels 41 kann die Länge des Schenkels z₂ direkt abgelesen werden.

Wenn man den Skalenträger 39 von der Rückseite betrachtet, ist dort an der 4. Mess-Skala 46 die Höhe a der Schweißnaht ohne Überhöhung ablesbar.

## Patentansprüche

1. Schweißnahtlehre (10) zum Messen der Abmessungen einer Schweißnaht (S), mit zwei gelenkig miteinander verbundenen und um eine Drehachse (D) relativ zueinander schwenkbaren Armen (11, 12), die mittels einer 1. Haltevorrichtung (15) der Schweißnahtlehre (10) relativ zueinander festlegbar sind, und einer 1. Skala (18), an der ein Abstand (b) zwischen zwei Messpunkten (11a, 12a) der Arme (11, 12) ablesbar ist, wobei die Schweißnahtlehre (10) ein Schubelement (23) aufweist, das in einer Linearführung (22) der Schweißnahtlehre (10) senkrecht zur Drehachse (D) verstellbar ist und das mittels einer 2. Haltevorrichtung (25) der Schweißnahtlehre (10) relativ zur Linearführung (22) festlegbar ist.

2. Schweißnahtlehre nach Anspruch 1, **dadurch gekennzeichnet, dass** die Arme (11, 12) in scherenartiger, sich kreuzender Konfiguration angeordnet sind, wobei die Drehachse (D) im Kreuzungsbereich verläuft.

3. Schweißnahtlehre nach Anspruch 1 oder 2, **dadurch gekennzeichnet, dass** das Schubelement (23) eine Schubstange (24) ist.

4. Schweißnahtlehre nach einem der Ansprüche 1 bis 3, **dadurch gekennzeichnet, dass** an einem der Arme (11) eine Skalenplatte (17) befestigt ist, die eine Führungsnut (32) aufweist, die von einem an dem anderen Arm (12) angebrachten Eingriffsteil (33) durchgriffen ist.

5. Schweißnahtlehre nach Anspruch 4, **dadurch gekennzeichnet, dass** die 1. Skala (18) auf der Skalenplatte (17) angeordnet ist.

6. Schweißnahtlehre nach einem der Ansprüche 1 bis 5, **dadurch gekennzeichnet, dass** die Linearführung (22) an einem Führungsteil (21) ausgebildet ist, das relativ zu den Armen (11, 12) um die Drehachse (D) schwenkbar ist.

7. Schweißnahtlehre nach Anspruch 6, **dadurch gekennzeichnet, dass** das Führungsteil (21) mittels einer 3. Haltevorrichtung (34) relativ zu den Armen (11, 12) festlegbar ist.

8. Schweißnahtlehre nach einem der Ansprüche 1 bis 7, **dadurch gekennzeichnet, dass** ein Indikatorteil (27) vorgesehen ist, das längs des Schubelementes (23) linear verstellbar ist.

9. Schweißnahtlehre nach Anspruch 8, **dadurch gekennzeichnet, dass** das Indikatorteil (27) mittels einer 4. Haltevorrichtung (29) relativ zum Schubelement (23) festlegbar ist.

10. Schweißnahtlehre nach einem der Ansprüche 8 oder 9, **dadurch gekennzeichnet, dass** auf der Skalenplatte (17) eine 3. Skala (31) vorgesehen ist, an der eine Position des Indikatorteils (27) relativ zur Skalenplatte (17) ablesbar ist.

11. Schweißnahtlehre nach einem der Ansprüche 1 bis 10, **dadurch gekennzeichnet, dass** ein Stützelement (47) vorgesehen ist, das linear verschieblich in einer weiteren Linearführung (49) an einem der Arme (11, 12) gelagert ist.

12. Schweißnahtlehre nach Anspruch 11, **dadurch gekennzeichnet, dass** eine 5. Haltevorrichtung (51) vorgesehen ist, mittels der das Stützelement (47) in der weiteren Linearführung (49) festlegbar ist.

13. Schweißnahtlehre nach Anspruch 11 oder 12, **dadurch gekennzeichnet, dass** das Stützelement (47) ein Stützstab (48) ist.

14. Schweißnahtlehre nach einem der Ansprüche 1 bis 13, **dadurch gekennzeichnet, dass** ein Skalenträger (39) vorgesehen ist, der eine Auflagefläche für die Messpunkte (11c, 12c) der Arme (11, 12) und zumindest eine 1. Mess-Skala (43) zur Ermittlung der Schweißnahthöhe (a) aufweist.

## Claims

1. Weld seam gauge (10) for measuring the dimensions of a weld seam (S), having two arms (11, 12) that are connected together in an articulated manner, are pivotable relative to one another about an axis of rotation (D) and are fixable relative to one another by means of a first holding device (15) of the weld seam gauge (10), and having a first scale (18), from which a distance (b) between two measuring points (11a, 12a) of the arms (11, 12) is readable, wherein the weld seam gauge (10) has a sliding element (23) that is adjustable perpendicularly to the axis of rotation (D) in a linear guide (22) of the weld seam gauge (10) and is fixable relative to the linear guide (22) by means of a second holding device (25) of the weld seam gauge (10).

2. Weld seam gauge according to Claim 1, **characterized in that** the arms (11, 12) are arranged in a scissor-like, crossing configuration, wherein the axis of rotation (D) extends in the crossing region.

3. Weld seam gauge according to Claim 1 or 2, **characterized in that** the sliding element (23) is a sliding rod (24).

4. Weld seam gauge according to one of Claims 1 to 3, **characterized in that** a scale plate (17) is fastened to one of the arms (11), said scale plate (17) having a guide slot (32) through which an engagement part (33) attached to the other arm (12) engages.

5. Weld seam gauge according to Claim 4, **characterized in that** the first scale (18) is arranged on the scale plate (17).

6. Weld seam gauge according to one of Claims 1 to 5, **characterized in that** the linear guide (22) is formed on a guide part (21) that is pivotable about the axis of rotation (D) relative to the arms (11, 12).

7. Weld seam gauge according to Claim 6, **characterized in that** the guide part (21) is fixable relative to the arms (11, 12) by means of a third holding device (34).

8. Weld seam gauge according to one of Claims 1 to 7, **characterized in that** an indicator part (27) is provided, which is linearly adjustable along the sliding element (23).

9. Weld seam gauge according to Claim 8, **characterized in that** the indicator part (27) is fixable relative to the sliding element (23) by means of a fourth holding device (29).

10. Weld seam gauge according to one either of Claims 8 and 9, **characterized in that** a third scale (31) is provided on the scale plate (17), a position of the indicator part (27) relative to the scale plate (17) being readable from said third scale (31).

11. Weld seam gauge according to one of Claims 1 to 10, **characterized in that** a support element (47) is provided, which is mounted on one of the arms (11, 12) so as to be linearly displaceable in a further linear guide (49).

12. Weld seam gauge according to Claim 11, **characterized in that** a fifth holding device (51) is provided, by means of which the support element (47) is fixable in the further linear guide (49).

13. Weld seam gauge according to Claim 11 or 12, **characterized in that** the support element (47) is a support bar (48).

14. Weld seam gauge according to one of Claims 1 to 13, **characterized in that** a scale carrier (39) is provided, which has a locating face for the measuring points (11c, 12c) of the arms (11, 12), and at least one first measuring scale (43) for determining the weld seam height (a).

## Revendications

1. Jauge de cordon de soudure (10) destinée à mesurer les dimensions d'un cordon de soudure (S), avec deux bras (11, 12) reliés l'un à l'autre de façon articulée et pouvant pivoter l'un par rapport à l'autre autour d'un axe de rotation (D), lesdits bras pouvant être fixés l'un par rapport à l'autre au moyen d'un 1^{er} dispositif de maintien (15) de la jauge de cordon de soudure (10), et avec un 1^{er} cadran (18) au niveau duquel une distance (b) entre deux points de mesure (11a, 12a) des bras (11, 12) peut être lue, la jauge de cordon de soudure (10) comportant un élément de poussée (23) pouvant être déplacé dans un guide linéaire (22) de la jauge de cordon de soudure (10) perpendiculairement à l'axe de rotation (D) et pouvant être fixé par rapport au guide linéaire (22) au moyen d'un 2^{e} dispositif de maintien (25) de la jauge de cordon de soudure (10).

2. Jauge de cordon de soudure selon la revendication 1, **caractérisée en ce que** les bras (11, 12) sont disposés dans une configuration se croisant en cisaillement, l'axe de rotation (D) s'étendant dans la zone d'intersection.

3. Jauge de cordon de soudure selon la revendication 1 ou 2, **caractérisée en ce que** l'élément de poussée (23) est une tige de poussée (24).

4. Jauge de cordon de soudure selon l'une quelconque des revendications 1 à 3, **caractérisée en ce qu'**une plaque de cadran (17) est fixée à un des bras (11), ladite plaque comportant une rainure de guidage (32) agrippée par une partie de mise en prise (33) disposée au niveau de l'autre bras (12).

5. Jauge de cordon de soudure selon la revendication 4, **caractérisée en ce que** le 1^{er} cadran (18) est disposé sur la plaque de cadran (17).

6. Jauge de cordon de soudure selon l'une quelconque des revendications 1 à 5, **caractérisée en ce que** le guide linéaire (22) est réalisé au niveau d'une partie de guidage (21) pouvant pivoter par rapport aux bras (11, 12), autour de l'axe de rotation (D).

7. Jauge de cordon de soudure selon la revendication 6, **caractérisée en ce que** la partie de guidage (21) peut être fixée par rapport aux bras (11, 12) au moyen d'un 3^{e} dispositif de maintien (34).

8. Jauge de cordon de soudure selon l'une quelconque des revendications 1 à 7, **caractérisée en ce qu'**une partie d'indicateur (27) est prévue, cette partie pouvant être déplacée de façon linéaire le long de l'élément de poussée (23).

9. Jauge de cordon de soudure selon la revendication 8, **caractérisée en ce que** la partie d'indicateur (27) peut être fixée par rapport à l'élément de poussée (23) au moyen d'un 4^{e} dispositif de maintien (29).

10. Jauge de cordon de soudure selon l'une quelconque des revendications 8 ou 9, **caractérisée en ce qu'**un 3^{e} cadran (31) est prévu sur la plaque de cadran (17) au niveau duquel une position de la partie d'indicateur (27) par rapport à la plaque de cadran (17) peut être lue.

11. Jauge de cordon de soudure selon l'une quelconque des revendications 1 à 10, **caractérisée en ce qu'**un élément de maintien (47) est prévu, celui-ci étant disposé de façon à pouvoir coulisser de façon linéaire dans un autre guide linéaire (49) au niveau d'un des bras (11, 12).

12. Jauge de cordon de soudure selon la revendication 11, **caractérisée en ce qu'**un 5^{e} dispositif de maintien (51) est prévu à l'aide duquel l'élément de maintien (47) peut être fixé dans l'autre guide linéaire (49).

13. Jauge de cordon de soudure selon la revendication 11 ou 12, **caractérisée en ce que** l'élément de maintien (47) est une tige de maintien (48).

14. Jauge de cordon de soudure selon l'une quelconque des revendications 1 à 13, **caractérisée en ce qu'**un support de cadran (39) est prévu, celui-ci comportant une surface portante pour les points de mesure (11c, 12c) des bras (11, 12) et au moins un 1^{er} cadran de mesure (43) pour calculer la hauteur du cordon de soudure (a).
